Europäisches Patentamt

European Patent Office

Office européen des brevets

(11) Veröffentlichungsnummer: **0 607 226 B1**

(12) **EUROPÄISCHE PATENTSCHRIFT**

(45) Veröffentlichungstag der Patentschrift: **22.03.95**

(51) Int. Cl.6: **B62D 5/00**, B62D 6/00, B62D 9/00

(21) Anmeldenummer: **92920897.3**

(22) Anmeldetag: **06.10.92**

(86) Internationale Anmeldenummer: **PCT/DE92/00859**

(87) Internationale Veröffentlichungsnummer: **WO 93/08063 (29.04.93 93/11)**

(54) **LENKUNGSUNTERSTÜTZUNG BEI EINEM NICHT-SPURGEBUNDENEN FAHRZEUG.**

(30) Priorität: **16.10.91 DE 4134240**

(43) Veröffentlichungstag der Anmeldung:
**27.07.94 Patentblatt 94/30**

(45) Bekanntmachung des Hinweises auf die Patenterteilung:
**22.03.95 Patentblatt 95/12**

(84) Benannte Vertragsstaaten:
**DE ES FR GB IT SE**

(56) Entgegenhaltungen:
**EP-A- 0 044 773**
**FR-A- 2 418 136**
**GB-A- 1 307 088**
**GB-A- 2 203 396**
**US-A- 3 970 160**

**PATENT ABSTRACTS OF JAPAN vol. 6, no. 130 (M-143)16. Juli 1982 & JP-A-57055260 (MITSUBISHI AGRICULT MACH CO) 2 April 1982**

(73) Patentinhaber: **MANNESMANN Aktiengesellschaft**
**Postfach 10 36 41**
**D-40027 Düsseldorf (DE)**

(72) Erfinder: **ADLER, Uwe**
**Baunachweg 4**
**D-97422 Schweinfurt (DE)**
Erfinder: **DREXL, Hans-Jürgen**
**Kaltenhöfer Steige 11**
**D-97453 Schonungen/Mgb. (DE)**
Erfinder: **LUTZ, Dieter**
**Spessartstr. 12**
**D-97422 Schweinfurt (DE)**
Erfinder: **NAGLER, Franz**
**Am Zehntgrafen 12**
**D-97503 Ottendorf (DE)**
Erfinder: **OCHS, Martin**
**Ebersbergstr. 10**
**D-97422 Schweinfurt (DE)**
Erfinder: **SCHIEBOLD, Stefan**
**Gymnasiumstr. 4**
**D-97421 Schweinfurt (DE)**

PATENT ABSTRACTS OF JAPAN vol. 12, no. 27 (M-662)(2874) 27. Januar 1988 & JP-A-62181918 (FUJI HEAVY IND. LTD.) 10 August 1987

Erfinder: **SCHMIDT-BRÜCKEN, Hans-Joachim**
**Sonnenstrasse 9**
**D-97505 Geldersheim (DE)**
Erfinder: **THIELER, Wolfgang**
**Kastanienweg 1**
**D-97437 Hassfurt (DE)**
Erfinder: **WAGNER, Michael**
**Ottostrasse 3**
**D-97464 Niederwerrn (DE)**
Erfinder: **WESTENDORF, Holger**
**Gänseleite 8**
**D-97456 Hambach (DE)**
Erfinder: **WYCHNANEK, Rainer**
**Erlenbrunnstrasse 13**
**D-97532 Madenhausen (DE)**
Erfinder: **RÖDER, Manfred**
**Mittlere Heide 30**
**D-97525 Schwebheim (DE)**

(74) Vertreter: **Meissner, Peter E., Dipl.-Ing. et al**
**Meissner & Meissner,**
**Patentanwaltsbüro,**
**Hohenzollerndamm 89**
**D-14199 Berlin (DE)**

**Beschreibung**

Die Erfindung betrifft ein nicht-spurgebundenes Fahrzeug mit mindestens zwei Radpaaren mit jeweils einem linken und einem rechten Rad, die zumindest bei einem Radpaar von einem Lenkrad verstellbar sind und die zumindest bei einem Radpaar je von einem Einzelantrieb angetrieben sind.

Bei nicht-spurgebundenen Fahrzeugen, also PKW, LKW, Bussen und dergleichen, die in aller Regel mittels Verbrennungsmotoren angetrieben werden, sind Lenkhilfen (Servolenkung) üblich. Eine von dem Verbrennungsmotor angetriebene Hydraulikpumpe dient als Energiequelle, welche die erforderliche Energie zum Verstärken der von dem Fahrer über das Lenkrad Lenkrad auf die gelenkten Räder aufgebrachten Kraft bereitstellt. Außer der Hydraulikpumpe sind Steuerventile, Lenkventile, Lenkzylinder, ein Ölbehälter sowie Leitungsverbindungen notwendig. Damit ist bei den bisher üblichen Lenkhilfen ein beträchtlicher Aufwand erforderlich.

In jüngerer Zeit sind neue Fahrzeug-Antriebskonzepte entwickelt worden, die von den jahrzehntelang allgemein üblichen Verbrennungsmotor-Antrieben stark abweichen. So z.B. sind nicht-spurgebundene Fahrzeuge mit batteriegespeistem Elektromotorantrieb vorgeschlagen worden. Daneben gab es Vorschläge für Hybridantriebe. Hierbei wird am Fahrzeug eine Verbrennungsmotor-Generator-Einheit vorgesehen, wobei die von dem Generator gelieferte elektrische Energie über eine Leistungselektronik an starr mit den angetriebenen Rädern gekoppelte Elektromotoren geliefert wird. Solche Antriebe haben gewisse Vorteile, da sie eine differenziertere Steuerung zulassen als reine Verbrennungsmotor-Antriebe.

Ein wesentliches Merkmal der Fahrzeuge mit elektromotorischem Antrieb an mindestens zwei Rädern ist der Umstand, daß die angetriebenen Räder jeweils über einen Einzelantrieb verfügen.

Denkt man an eine allmähliche Umstellung von lediglich mit Verbrennungsmotor angetriebenen Kraftfahrzeugen auf Elektrofahrzeuge oder Fahrzeuge mit Hybridantrieb, so steht eine Anpassung der Handhabung dieser neuen Fahrzeuge an die Handhabung der mittels Verbrennungsmotor angetriebenen Fahrzeuge im Vordergrund. Bezüglich der Fahrzeuglenkung bedeutet dies, daß auch eine Lenkhilfe oder Lenkungsunterstützung verfügbar sein soll, da insbesondere bei schwereren Fahrzeugen mit Gummibereifung erhebliche Widerstände beim Lenken überwunden werden müssen. Hier bietet sich zunächst die konventionelle Technik für Lenkungsunterstützungen an, d.h. man könnte - bei elektrisch angetriebenem Hydraulikmotor - die übliche Servolenkung vorsehen. Man könnte die Lenkung auch elektromotorisch auslegen, d.h. es wird ein Elektromotor abhängig von der Lenkradstellung betätigt, um ein Lenkgestänge zu bewegen. Auch diese Art der Lenkungsunterstützung ist jedoch mit beträchtlichem Aufwand verbunden.

Aus der JP 62-181 918 A ist ein Fahrzeugantrieb bekannt, bei dem ein über hydraulische Kupplungen gesteuertes mechanisches Getriebe für die Fahrzeughinterachse vorgesehen ist, das es ermöglicht, die Drehmomentverteilung zwischen den beiden Antriebsrädern auf der linken und rechten Seite der Hinterachse in Abhängigkeit von der Fahrzeuggeschwindigkeit, dem Winkel und der Betätigungsgeschwindigkeit des Lenkrads so zu beeinflussen, daß das kurvenäußere Antriebsrad ein höheres Drehmoment als das kurveninnere Antriebsrad erhält. Der dafür erforderliche konstruktive Aufwand ist außerordentlich hoch. Über die angewendete Regelstrategie bei der Momenteneinstellung werden keine näheren Angaben gemacht.

Der Erfindung liegt die Aufgabe zugrunde, ein nicht-spurgebundenes Fahrzeug der eingangs genannten Art anzugeben, bei dem eine Lenkungsunterstützung mit vernachlässigbarem Aufwand, jedoch hoher Effektivität verfügbar ist.

Gelöst wird diese Aufgabe erfindungsgemäß durch ein Fahrzeug mit den Merkmalen des Patentanspruchs 1. Vorteilhafte Weiterbildungen der Erfindung sind in den Unteransprüchen 2 - 4 angegeben.

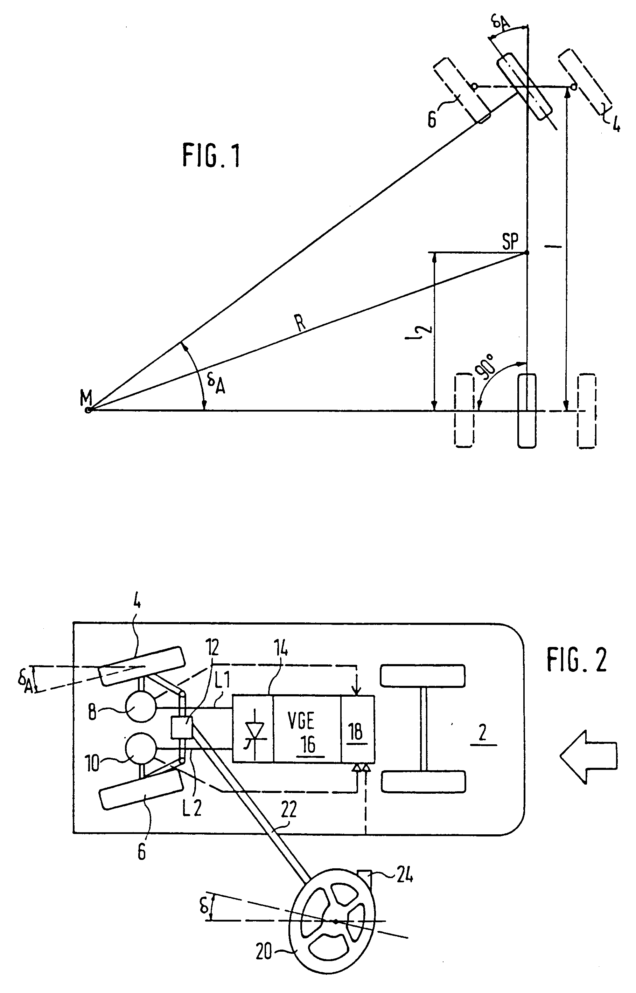

Naturgemäß ergibt sich bei einer Kurvenfahrt für das äußere Rad eine höhere Raddrehzahl als für das innere Rad. Als Berechnungsgrundlage dient das sogenannte Einspurmodell, aus dem sich gemäß der beiliegenden Fig. 1 bei einem Sollkurvenradius R der von dem Lenkradwinkel abhängige Lenkwinkel $\delta_A$ gemäß "Ackermann" wie folgt berechnet:

$$\tan \delta_A = 1/\sqrt{R^2 - 1_2^2} \qquad\qquad (1)$$

mit

$1_2 = (m_v/m_g) \cdot 1 \quad (2)$

$1 \qquad$ = Achsabstand

$l_2$ = Abstand des Schwerpunkts SP von der Hinterachse
R = Sollkurvenradius
$\delta_A$ = Lenkwinkel
$m_v$ = gewogene Vorderradachslast
$m_g$ = Fahrzeuggesamtgewicht

Man sieht, daß sich anhand dieses Einspurmodells unter Berücksichtigung der Spurweite des Fahrzeugs die prozentualen Raddrehzahlunterschiede zwischen den äußeren und den inneren Rädern des Fahrzeugs ermitteln lassen.

Trägt man den prozentualen Raddrehzahlunterschied zwischen äußerem und innerem Rad über den Lenkwinkel an dem jeweiligen Rad auf, so ergibt sich theoretisch ein linearer Zusammenhang, bei einem Lenkwinkel am Rad von ca. 10° ergibt sich ein prozentualer Raddrehzahlunterschied von etwa 10%.

Beim Fahren mit einem einen Einzelradantrieb aufweisenden Fahrzeug wird die Antriebsleistung von dem Fahrer durch Betätigen des Fahrpedals vorgegeben. Diese Antriebsleistung muß insgesamt auf die Antriebsräder übertragen werden. Die vom Fahrer vorgegebene Gesamtantriebsleistung ist also die Summe der Einzelradantriebsleistungen.

Abhängig von dem Lenkradwinkel und mithin dem Lenkwinkel am Rad wird nun erfindungsgemäß das auf das kurvenäußere Rad übertragene Moment oder die darauf übertragene Leistung (die Leistung hängt mit dem Moment über die Drehzahl linear zusammen) erhöht, während in entsprechendem Maß das Moment bzw. die Leistung am inneren Rad verringert wird.

Für den Fahrer des Fahrzeugs wird die Änderung des Antriebsmoments von äußerem und innerem Rad absolut spürbar in einer leichten Lenkbarkeit des Fahrzeugs.

Ein besonderer Vorteil der Erfindung liegt darin, daß die Einzelantriebe für die angetriebenen Räder als Elektromotoren ausgebildet sind und ohnehin separat angesteuert werden. Die Steuerung der Stromzufuhr zu den Antriebs-Elektromotoren kann daher den Lenkwinkel in sehr einfacher Weise berücksichtigen.

Gemäß dem Grundgedanken der Erfindung erfolgt das Erhöhen bzw. Erniedrigen der auf die angetriebenen Räder aufgebrachten Momente zunächst in Abhängigkeit von den theoretisch ermittelten, vom Lenkwinkel abhängigen prozentualen Raddrehzahlunterschieden. Dies gilt insbesondere für relativ geringe Fahrzeuggeschwindigkeiten (z.B. unter 50 km/h), bei denen die theoretischen Werte ganz oder nahezu (z.B. zu 80 oder 90 %) eingehalten werden.

Aus allgemeinen Erfahrungen einerseits und aus erfindungsgemäßen Gesichtspunkten andererseits ist jedoch bei höheren Fahrzeuggeschwindigkeiten eine zunehmende Abweichung von der theoretischen, linearen Kennlinie nach "Ackermann" vorgesehen. Hierauf soll im folgenden näher eingegangen werden.

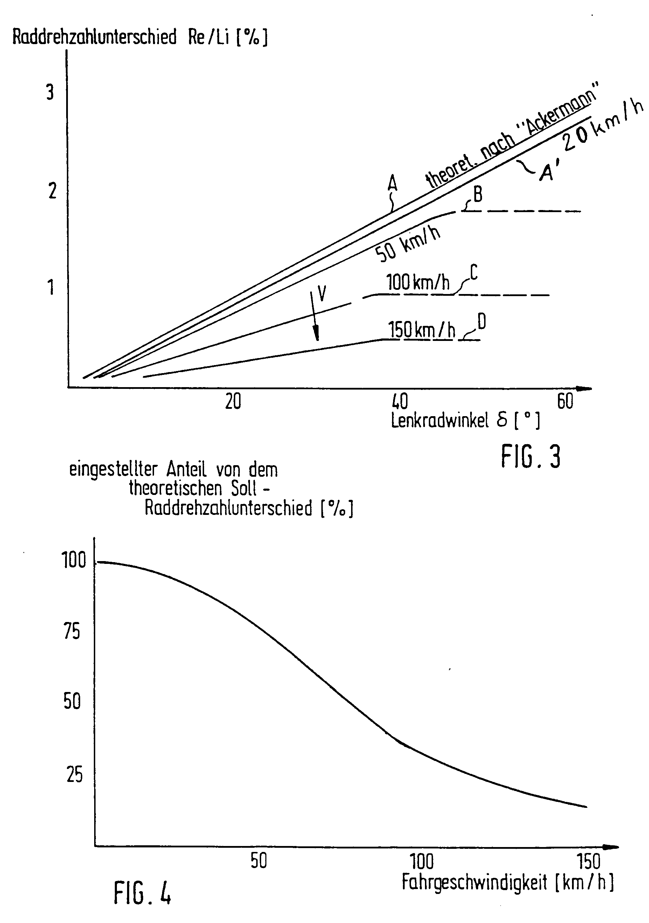

Fig. 3 zeigt in Form einer Geraden A den linearen, theoretischen Zusammenhang nach "Ackermann" zwischen Lenkradwinkel $\delta$ und dem prozentualen Raddrehzahlunterschied zwischen rechtem und linkem Rad. Bei einer Kurvenfahrt schlägt der Fahrer das Lenkrad des Fahrzeugs ein. Dabei stellen sich gewisse Drehzahlen und mithin Drehzahlunterschiede in den gelenkten Rädern ein. Durch Sensoren kann man die Drehzahlen der Räder erfassen, und man kann anhand der daraus ermittelten Differenz eine Abweichung zwischen der Ist-Differenz und der Soll-Differenz gemäß Fig. 3 berechnen. Diese Abweichung wird als Regelgröße zum Erhöhen bzw. Erniedrigen des Antriebsmoments für die einzelnen kurvenäußeren bzw. kurveninneren Antriebsräder herangezogen.

Es ist bekannt, daß bei extrem langsamen Fahrzeuggeschwindigkeiten der tatsächliche Ist-Raddrehzahlunterschied geringfügig von dem theoretischen Wert abweicht. Bei höheren Fahrzeuggeschwindigkeiten weichen die Ist-Raddrehzahlunterschiede immer stärker von den theoretischen Werten ab. Dies ist in Fig. 3 durch eine Kennlinienschar mit der Fahrzeuggeschwindigkeit v als Parameter dargestellt.

Die Kurve B in Fig. 3 zeigt qualitativ den Ist-Raddrehzahlunterschied in Abhängigkeit des Lenkradwinkels bei einer Fahrzeuggeschwindigkeit von 50 km/h, die Kennlinien C und D gelten qualitativ für Fahrzeuggeschwindigkeiten von 100 km/h bzw. 150 km/h.

Würde man die Regelung der verschiedenen Antriebsmomente des äußeren und des inneren Rads ausschließlich an der theoretischen Kennlinie A orientieren, so würde sich bei hohen Fahrzeuggeschwindigkeiten eine zu hohe Differenz der Antriebsmomente und somit für den Fahrer eine ungewöhnlich hohe Lenkungsunterstützung ergeben, die sich als übersteuern bemerkbar machen würde. Demgemäß sieht die Erfindung vor, daß die Einstellung der Einzelantriebe derart erfolgt, daß die prozentualen Raddrehzahlunterschiede zwischen äußerem und innerem Rad zumindest bei niedrigen Fahrzeuggeschwindigkeiten etwa der theoretischen geometrischen Beziehung nach "Ackermann" genügen, wobei als Regelgröße für die Einzelantrieb-Einstellung die Differenz zwischen dem Ist-Raddrehzahlunterschied und dem theoretischen Soll-Raddrehzahlunterschied herangezogen wird, während bei höheren Fahrzeuggeschwindigkeiten eine zunehmend stärkere Abweichung von der geometrischen Beziehung vorgesehen ist.

Die Momentenunterschiede zwischen kurvenäußerem und kurveninnerem Rad sollten in vorteilhafter Weiterbildung der Erfindung

a) bei höherer Lenkrad-Winkelgeschwindigkeit und/oder

b) bei größeren Lenkradwinkeln höher werden.

Die Einstellung geringerer Raddrehzahlunterschiede bei höherer Fahrzeuggeschwindigkeit durch relativ geringere Momentenunterschiede entspricht der Kennlinienschar in Fig. 3. Hieraus resultiert der in Fig. 4 skizzierte Verlauf der von der Steuerung des Fahrzeugantriebs eingestellten Anteile von den theoretischen Soll-Raddrehzahlunterschieden. In einem Bereich nahe der Fahrgeschwindigkeit 0 erfolgt die Einstellung der Raddrehzahlunterschiede zu 100 % entsprechend der theoretischen Kennlinie A oder beispielsweise entsprechend der davon nur geringfügig abweichenden Kennlinie A' in Fig. 3. Mit zunehmender Fahrzeuggeschwindigkeit wird eine immer größere Abweichung von der theoretischen Kennlinie zugelassen. Der jeweilige Drehzahlunterschied wird also immer geringer, d.h. von dem theoretischen Soll-Drehzahlunterschied wird nur noch ein kleiner Anteil eingestellt. Bei hohen Fahrzeuggeschwindigkeiten erfolgt also praktisch keine Lenkhilfe mehr; die Lenkung ist fast "direkt".

Als niedrige Geschwindigkeit wird in diesem Zusammenhang eine Geschwindigkeit unter 40 km/h verstanden. Bis dahin darf die angestrebte Drehzahldifferenz (Soll-Raddrehzahlunterschied) um nicht mehr als höchstens 20 % geringer als der theoretische Drehzahlunterschied nach "Ackermann" sein. Unterhalb einer Geschwindigkeit von z.B. 25 km/h sollte diese Abweichung weniger als 10 % betragen. Bei Geschwindigkeiten unter 10 km/h sollte die Drehzahldifferenz nach "Ackermann" möglichst eingehalten werden. Dagegen wird bei höheren Fahrzeuggeschwindigkeiten nur noch ein Bruchteil der theoretischen Differenz nach "Ackermann" eingestellt, bei über 100 km/h beispielsweise weniger als 60% dieser Differenz.

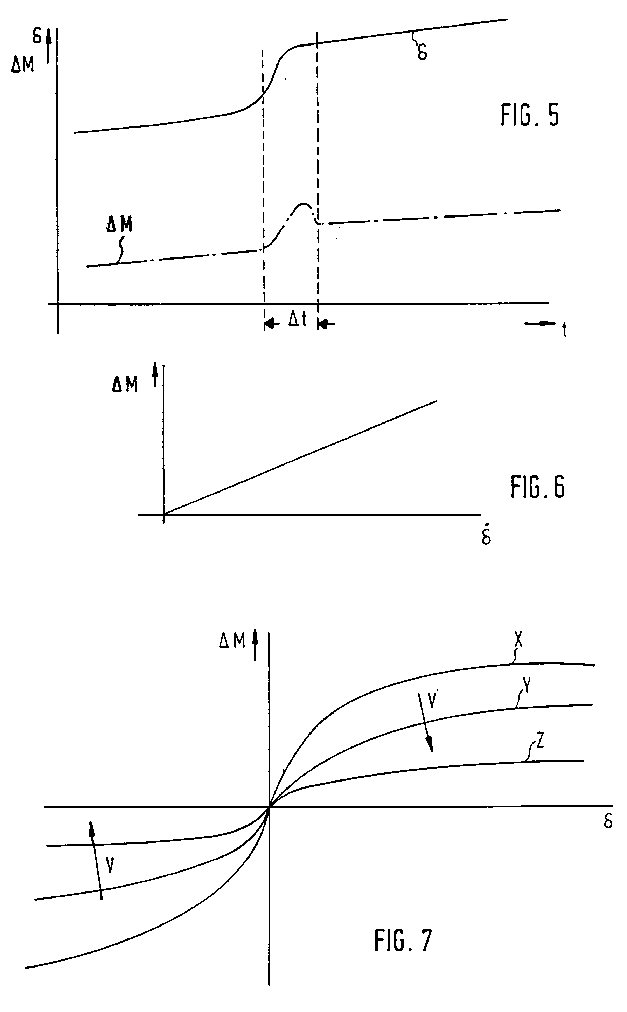

Gemäß der obigen Alternative a) erhöht sich der Unterschied der auf die einzeln angetriebenen Räder aufgebrachten Antriebsmomente bei höheren Lenkrad-Winkelgeschwindigkeiten. Das heißt, wenn das Lenkrad sehr rasch gedreht wird, erfolgt eine sehr starke Lenkungsunterstützung. Dieser Zusammenhang ist in Fig. 6 skizziert, in der die Momentendifferenz über der Lenkrad-Winkelgeschwindigkeit $\dot{\delta}$ als qualitative Funktion dargestellt ist. Es sind auch andere stetig steigende Funktionsverläufe (z.B. degressiv oder progressiv) anwendbar.

Auch ist eine Abhängigkeit der Momentenunterschiede von dem Lenkradwinkel gegeben. Bei größeren Lenkradausschlägen oder Lenkradwinkeln soll gemäß Alternative b) auch der Momentenunterschied zwischen äußerem und innerem Rad größer sein, wobei gemäß Fig. 7 die Abhängigkeit nicht linear ist, sondern bei größeren Lenkradwinkeln etwas abflacht. Hierdurch ergibt sich z.B. beim Rangieren eines Fahrzeugs der Vorteil, daß bei großen Einschlägen des Lenkrads eine sehr starke Lenkungsunterstützung erfolgt, wodurch sich z.B. das Einparken als sehr bequem erweist. Wenn dazu noch das Lenkrad sehr rasch bewegt wird, wird durch die zeitlich begrenzte überproportionale Lenkungsunterstützung infolge kurzzeitig höherer Momentendifferenz zwischen kurvenäußeren und kurveninneren Antriebsrädern eine hohe Ansprechempfindlichkeit der Lenkungsunterstützung erreicht.

Aus Fig. 7 ist auch die Abhängigkeit der Momentenänderung von der Fahrzeuggeschwindigkeit dargestellt. Die Kurve X gilt für niedrige Fahrzeuggeschwindigkeiten, die Kurve Y für mittlere und die Kurve Z für hohe Fahrzeuggeschwindigkeiten.

Faßt man die obigen Betrachtungen zusammen, so ergibt sich für eine zeitliche Änderung des Lenkradwinkels $\delta$ ein Momentenunterschied $\delta M$ zwischen kurvenäußerem und kurveninnerem Rad, wie er exemplarisch in Fig. 5 dargestellt ist. Zunächst ändert sich der Lenkradwinkel $\delta$ langsam aber stetig, wobei eine konstante mittlere Fahrzeuggeschwindigkeit angenommen ist. Dementsprechend ändert sich auch der Momentenunterschied, d.h. das Ausmaß der Lenkungsunterstützung. In einem Abschnitt $\Delta t$ soll dann die Lenkraddrehung beschleunigt werden. Mithin ergibt sich gemäß Fig. 6 eine Erhöhung des Momentenunter-schiedes $\Delta M$ und damit der Lenkungsunterstützung, da die Winkelgeschwindigkeit des Lenkrads erhöht wird. Außerdem ergibt sich durch den größeren Lenkrad-Einschlag gemäß Fig. 7 noch eine zusätzliche Erhöhung der Lenkungsunterstützung. In Fig. 5 ist der Momentenunterschied $\Delta M$ durch einen stark ansteigenden Abschnitt gekennzeichnet. Wenn die Bewegung des Lenkrads wieder verlangsamt wird, in Fig. 5 durch einen wieder allmählichen langsamen Anstieg der Kurve $\delta$ dargestellt, fällt die Lenkungsunter-stützung etwas ab. Gemäß dem in Fig. 7 dargestellten Kennlinienfeld nimmt dann auch bei weiterer, gleichmäßig stetiger Erhöhung des Lenkradwinkels $\delta$ die Lenkungsunterstützung kaum mehr zu, was auf die Abflachung der Kurvenschar in Fig. 7 bei größeren Werten von $\delta$ zurückzuführen ist.

Durch die Erfindung wird also bei gegebenem Einzelradantrieb eine mit extrem geringem Aufwand realisierbare Lenkungsunterstützung möglich, wobei mit ebenfalls geringem Aufwand Maßnahmen getroffen werden können, die in praktisch allen möglichen Situationen ein leichtes und sicheres Lenken des Fahrzeugs gestatten.

Im folgenden werden Ausführungsbeispiele der Erfindung anhand der Zeichnungen näher erläutert. Es zeigen:

Fig. 1 - eine Skizze zum Veranschaulichen der Berechnung der Raddrehzahlunterschiede bei einem Fahrzeug in Kurvenfahrt,

Fig. 2 - eine schematische Skizze eines mit einer Verbrennungsmotor-Generator-Einheit (VGE) ausgestatteten Fahrzeugs mit Lenkungsunterstützung gemäß der Erfindung,

Fig. 3 - eine graphische Darstellung der Abhängigkeit des Raddrehzahlunterschieds von dem Lenkradwinkel,

Fig. 4 - eine graphische Darstellung des Ausgleichs der Raddrehzahlunterschiede in Abhängigkeit von der Fahrzeuggeschwindigkeit,

Fig. 5 - eine graphische Darstellung, die in Abhängigkeit von der Zeit die Beziehung zwischen dem Lenkradwinkel und dem zur Lenkungsunterstützung erzeugten Momentenunterschied an den einzeln angetriebenen Rädern des Fahrzeugs nach Fig. 2 zeigt,

Fig. 6 - eine graphische Darstellung der Beziehung zwischen Lenkrad-Winkelgeschwindigkeit und Momentenunterschied für die einzeln angetriebenen Räder, und

Fig. 7 - eine graphische Darstellung der Abhängigkeit des an den einzeln angetriebenen Rädern erzeugten Momentenunterschieds mit der Fahrzeuggeschwindigkeit als Parameter, abhängig vom Lenkradwinkel.

Fig. 2 zeigt schematisch einen Personenkraftwagen 2 mit einem nicht-angetriebenen Hinterradpaar und einem Paar angetriebener Vorderräder, die hier für eine Kurvenfahrt nach links auf einen Lenkwinkel $\delta_A$ eingestellt sind.

Das bezüglich der Kurve äußere Vorderrad 4 ist von einem mit ihm gekoppelten Elektromotor 8, das innere Vorderrad 6 ist von einem damit gekoppelten Elektromotor 10 angetrieben. Ein in herkömmlicher Weise ausgebildetes Lenkgestänge ist über ein Lenkgetriebe 12 und einer Lenksäule 22 mit einem Lenkrad 20 gekoppelt. Bei einem Lenkradausschlag $\delta$ ergibt sich ein Lenkwinkel $\delta_A$ der Vorderräder 4 und 6.

Als Energiequelle besitzt das Fahrzeug 2 eine Verbrennungsmotor-Generator-Einheit(VGE) 16. Der Generatorteil liefert elektrischen Strom an einen mit einer Leistungselektronik ausgestatteten Energieverteiler 14, der über Stromleitungen L1 und L2 die Stromzufuhr zu den beiden Elektromotoren 8 und 10 individuell steuert. Die Steuerung des Energieverteilers 14, der VGE 16 und weiterer, hier nicht interessierender Komponenten des Fahrzeugs 2 erfolgt durch eine mit einem Mikroprozessor bestückte Steuerung 18, die hierzu Sensorsignale von verschiedenen Sensoren empfängt.

Insbesondere empfängt die Steuerung 18 Raddrehzahlsignale, die an den mit den Vorderrädern 4 und 6 gekoppelten Elektromotoren 8 bzw. 10 abgegriffen werden. Die Signalwege sind in Fig. 2 gestrichelt dargestellt.

Außerdem empfängt die Steuerung 18 mittels eines im Bereich der Lenkung angebrachten Sensors 24 ein Stellungssignal, welches repräsentativ ist für den Lenkradwinkel oder Lenkradeinschlag $\delta$.

Die Steuerung 18 empfängt von einem nicht dargestellten Fahrhebel ein Signal, welches kennzeichnend ist für die vom Fahrer angeforderte Leistung. Dementsprechend steuert die Steuerung 18 die VGE 16 und den Energieverteiler 14, um an den Rädern 4 und 6 die von dem Fahrer angeforderte Leistung über die Elektromotoren 8 und 10 bereitzustellen. Abhängig von dem Lenkwinkel $\delta_A$ und mithin vom Lenkradwinkel $\delta$ erzeugt die Steuerung 18 über den Energieverteiler 14 eine einer prozentualen Radlaufdifferenz zwischen Außenrad 4 und Innenrad 6 entsprechende Antriebsmomentendifferenz. Ausgehend von der Gesamt-Antriebsleistung wird die Leistung bzw. das Drehmoment am mit dem äußeren Rad 4 gekoppelten Elektromotor 8 um einen bestimmten Betrag erhöht, und (z. B. betragsmäßig gleich) wird die Leistung des mit dem inneren Rad 6 gekoppelten Elektromotors 10 verringert.

In einer abgewandelten Ausführungsform kann jedes der vier Räder des Fahrzeugs mit einem eigenen Elektromotor ausgestattet sein. Dann können sämtliche Räder bei Kurvenfahrten individuell angesteuert werden.

In einer weiteren abgewandelten Ausführungsform können die Hinterräder des Fahrzeugs angetrieben werden, während die Vorderräder lediglich mitlaufen und mit der Lenkung gekoppelt sind. Die einzeln angetriebenen Räder können, müssen aber nicht identisch mit den gelenkten Rädern sein.

Der in Fig. 2 vereinfachend am Lenkrad dargestellte Sensor 24 wird zweckmäßigerweise am Lenkgetriebe 12 oder an dem Lenkgestänge angeordnet.

Wie oben erläutert, entspricht die prozentuale Raddrehzahldifferenz bei Kurvenfahrten theoretisch einer Geraden A in Fig. 3. Bei sehr niedrigen Geschwindigkeiten wird - abhängig von dem Lenkradwinkel $\delta$ - eine Momentenverteilung dahingehend vorgenommen, daß mit den auf die einzeln angetriebenen Räder aufgebrachten Antriebsmomenten der Soll-Raddrehzahlunterschied gemäß der Geraden A in Fig. 3 erreicht wird. Mit anderen Worten, Regelgröße ist die Differenz zwischen dem Soll-Raddrehzahlunterschied gemäß der Geraden A in Fig. 3 und dem über die Sensoren an den Elektromotoren 8 und 10 von der Steuerung 18 erfaßten Ist-Raddrehzahlunterschied.

Durch die Einstellung der Antriebsmomentendifferenz bei einer Kurvenfahrt wird die äußere Seite des Fahrzeugs stärker angetrieben als die innere Seite. Im Extremfall führt diese Momentenverteilung zu einem Abbremsen der inneren Räder oder des inneren Rads. Die Momentenverteilung bewirkt eine aktive Unterstützung der Lenkung: Die zum Bewegen des Lenkgestänges aufzubringende Kraft ist erheblich geringer, als wenn kein Momentenunterschied in Kurvenfahrten eingestellt würde.

Wie oben bereits erläutert, erfolgt die Einstellung des Momentenunterschieds in Abhängigkeit der Fahrzeuggeschwindigkeit. Der Unterschied ist umso geringer, je höher die Fahrzeuggeschwindigkeit ist. Dies ist in den Fig. 3 und 4 schematisch dargestellt.

Außerdem erfolgt das Ausmaß der Lenkungsunterstützung, d.h. das Ausmaß des Momentenunterschieds, in Abhängigkeit der Lenkradstellung und der Lenkrad-Winkelgeschwindigkeit, wie dies in den Fig. 7 bzw. 6 dargestellt ist.

Es versteht sich, daß die vorliegende Erfindung auch auf Fahrzeuge mit mehr als einem gelenkten Radpaar anwendbar ist, beispielsweise auf PKW's mit gelenkter Vorder- und Hinterachse.

**Patentansprüche**

1. Nicht-spurgebundenes Fahrzeug mit mindestens zwei Radpaaren mit je einem linken und einem rechten Rad (4, 6), die zumindest bei einem Radpaar von einem Lenkrad (20) verstellbar sind und die zumindest bei einem Radpaar jeweils von Einzelantrieben (8, 10) angetrieben sind, wobei zur Lenkungsunterstützung bei Kurvenfahrt abhängig vom Lenkradwinkel ($\delta$) der Einzelantrieb des (kurven-) äußeren Rads (4) auf ein relativ höheres und der des inneren Rads (6) auf ein relativ niedrigeres Moment eingestellt wird,
   dadurch gekennzeichnet,
   daß die Einzelantriebe Elektromotoren (8, 10) sind,
   daß die Einstellung der Einzelantriebe derart erfolgt, daß die prozentualen Raddrehzahlunterschiede zwischen äußerem und innerem Rad bei niedrigen Fahrzeuggeschwindigkeiten etwa der theoretischen geometrischen Beziehung nach "Ackermann" genügen und bei höheren Fahrzeuggeschwindigkeiten die prozentualen Raddrehzahlunterschiede mit zunehmender Geschwindigkeit zunehmend geringer als die theoretischen Raddrehzahlunterschiede eingestellt werden, wobei als Regelgröße für die Einzelantrieb-Einstellung die Differenz zwischen dem Ist-Raddrehzahlunterschied und dem Soll-Raddrehzahlunterschied herangezogen wird.

2. Fahrzeug nach Anspruch 1,
   dadurch gekennzeichnet,
   daß die Einzelantrieb-Einstellung derart erfolgt, daß die Momentenunterschiede zwischen äußerem und innerem Rad um so höher sind, je höher die Lenkrad-Winkelgeschwindigkeit und/oder je größer der Lenkradwinkel ist.

3. Fahrzeug nach Anspruch 2,
   dadurch gekennzeichnet,
   daß das Fahrzeug mit einer Verbrennungsmotor-Generator-Einheit (16) ausgerüstet ist und daß die von dem Generator gelieferte elektrische Leistung über einen Leistungselektronik-Energieverteiler (14) gesteuert auf die Elektromotoren (8, 10) verteilt wird.

4. Fahrzeug nach einem der Ansprüche 1 bis 3,
   dadurch gekennzeichnet,
   daß die jeweilige Lenkradstellung mittels eines Lenkradsensors (24) erfaßt wird.

**Claims**

1. Non-trackbound vehicle with at least two pairs of wheels, each with a left and a right wheel (4, 6) which can be moved by a steering wheel (20), at least in the case of one pair of wheels, and which are each driven by separate drives (8, 10), at least in the case of one pair of wheels, wherein, depending on the steering wheel angle ($\delta$), the separate drive of the wheel (4) on the outside (of the curve) is set to a relatively higher and that of the wheel (6) on the inside to a relatively lower moment in order to provide power assistance when cornering, characterised in that the separate drives are electric motors (8, 10), that the separate drives are set such that the percentage wheel speed differences between the outside and the inside wheel at low vehicle Speeds approximately satisfy the theoretical geometrical relationship according to "Ackermann" and at higher vehicle speeds the percentage wheel speed differences are set to be increasingly smaller than the theoretical wheel speed differences as the speed increases, with the variation between the actual wheel speed difference and the desired wheel speed difference being used as controlling variable to set the separate drives.

2. Vehicle according to claim 1, characterised in that the separate drives are set such that the differences in moment between the outside and the inside wheel increase with the steering wheel angular velocity and/or the steering wheel angle.

3. Vehicle according to claim 2, characterised in that the vehicle is provided with an internal combustion engine-generator unit (16), and that the electrical power supplied by the generator is distributed to the electric motors (8, 10) under the control of a power electronics energy distributor (14).

4. Vehicle according to one of claims 1 to 3, characterised in that the respective steering wheel position is detected by means of a steering wheel sensor (24).

## Revendications

1. Véhicule non guidé sur une voie comportant au moins deux paires de roues avec à chaque fois une roue droite et une roue gauche (4,6), qui peuvent être réglées au moins pour une paire de roues par un volant de direction (20) et qui sont entraînées au moins pour une paire de roues à chaque fois par des entraînements individuels (8,10), l'entraînement individuel de la roue externe (à courbe) (4) étant réglé à un moment relativement plus élevé et l'entraînement individuel de la roue interne (6) étant réglé à un moment relativement plus faible pour assister la direction lors d'une conduite à virage en dépendance de l'angle ( $\delta$ ) du volant de direction,
caractérisé en ce que les entraînements individuels sont des moteurs électriques (8,10), en ce que le réglage des entraînements individuels est effectué de sorte que les différences de vitesses de rotation des roues en pourcentage entre les roues externe et interne, pour des vitesses réduites du véhicule, satisfont à peu près à la relation géométrique théorique selon "Ackermann" et, pour des vitesses plus élevées du véhicule, les différences de vitesses de rotation des roues en pourcentage pour une vitesse croissante sont réglées de façon plus faible de manière croissante que les différences théoriques de vitesses de rotation des roues, comme grandeur de régulation pour le réglage des entraînements individuels la différence entre d'une part la différence effective des vitesses de rotation des roues et d'autre part la différence prescrite des vitesses de rotation des roues étant utilisée.

2. Véhicule selon la revendication 1,
caractérisé en ce que le réglage des entraînements individuels est effectué de sorte que les différences de moments entre les roues externe et interne sont d'autant plus grandes que la vitesse angulaire du volant de direction et/ou l'angle du volant de direction sont plus élevés.

3. Véhicule selon la revendication 2,
caractérisé en ce que le véhicule est équipé d'une unité de générateur à moteur à combustion (16), et en ce que la puissance électrique fournie par le générateur est distribuée, en étant commandée par l'intermédiaire d'un distributeur d'énergie à électronique de puissance (14), aux moteurs électriques (8,10).

4. Véhicule selon l'une des revendications 1 à 3,
caractérisé en ce que la position effective du volant de direction est détectée au moyen d'un capteur pour volant de direction (24).

EP 0 607 226 B1

FIG.1

FIG. 2

Raddrehzahlunterschied Re/Li [%]

3

theoret. nach "Ackermann"

A

2                                    B
                    50 km/h

                                    A' 20 km/h

1                V      100 km/h     C

                    150 km/h     D

                    20              40              60

                    Lenkradwinkel δ [°]

FIG. 3

eingestellter Anteil von dem
        theoretischen Soll -
            Raddrehzahlunterschied [%]

100

75

50

25

            50              100             150

                    Fahrgeschwindigkeit [km/h]

FIG. 4

FIG. 5

FIG. 6

FIG. 7